(19) **Europäisches Patentamt**

**European Patent Office**

**Office européen des brevets**

(11) **EP 1 358 510 B1**

(12) **EUROPEAN PATENT SPECIFICATION**

(45) Date of publication and mention
of the grant of the patent:
**26.07.2006 Bulletin 2006/30**

(51) Int Cl.:
*G01V 1/30* *(2006.01)*      *G06T 17/10* *(2006.01)*

(21) Application number: **01906846.9**

(22) Date of filing: **31.01.2001**

(86) International application number:
**PCT/US2001/003227**

(87) International publication number:
**WO 2002/061463 (08.08.2002 Gazette 2002/32)**

(54) **METHOD FOR ANALYZING AND IMAGING AN ENHANCED THREE-DIMENSIONAL VOLUME DATA SET USING AT LEAST TWO ATTRIBUTES AND COMPUTER PROGRAM THEREFOR**

VERFAHREN ZUR ANALYSE UND ABBILDUNG EINER ANGEREICHERTEN DREIDIMENSIONALEN VOLUMENDATENMENGE UNTER VERWENDUNG VON MIND. ZWEI ATTRIBUTEN UND COMPUTER PROGRAMM DAFÜR

PROCEDE D'ANALYSE ET D'IMAGERIE D'UN ENSEMBLE AMELIORE DE DONNEES DE VOLUME TRIDIMENSIONNEL AU MOYEN D'AU MOINS DEUX ATTRIBUTS ET PROGRAMME D'ORDINATEUR CORRESPONDANT

(84) Designated Contracting States:
**AT BE CH CY DE DK ES FI FR GB GR IE IT LI LU MC NL PT SE TR**

(43) Date of publication of application:
**05.11.2003 Bulletin 2003/45**

(60) Divisional application:
**06010978.2**

(73) Proprietor: **LANDMARK GRAPHICS CORPORATION**
**Houston, TX 77042 (US)**

(72) Inventors:
• **LEES, Jack**
  **Houston, TX 77005 (US)**

• **SHEFFIELD, Tatum, M.**
  **Missouri City, TX 77459 (US)**

(74) Representative: **Hoarton, Lloyd Douglas Charles et al**
**Forrester & Boehmert,**
**Pettenkoferstrasse 20-22**
**80336 München (DE)**

(56) References cited:
**US-A- 4 467 461        US-A- 5 410 250**
**US-A- 5 586 082        US-A- 5 798 982**
**US-A- 5 966 672**

• **LEES, J.A.: "Constructing faults from seed picks by voxel tracking" THE LEADING EDGE, March 1999 (1999-03), pages 338-340, XP002330014**

**Description**

**BACKGROUND OF THE INVENTION**

**FIELD OF THE INVENTION**

The present invention relates generally to imaging of three-dimensional ("3D") volume data sets. More particularly, the present invention relates to improved imaging and analysis of physical attributes representing events within 3D volume data sets.

**RELATED ART**

Many fields of endeavor require the analysis and imaging of 3D volume data sets. For example, in the medical field, a computerized axial tomography ("CAT") scanner or a magnetic resonance imaging ("MRI") device is used to produce a picture or diagnostic image of some part of a patient's body. The scanner or MRI device generates a 3D volume data set that needs to be imaged or displayed so that medical personnel can analyze the image and form a diagnosis.

Three-dimensional volume data sets are also used in various fields of endeavor relating to the earth sciences. Seismic sounding is one method for exploring the subsurface geology of the earth. An underground explosion or earthquake excites seismic waves, similar to low frequency sound waves, that travel below the surface of earth and are detected by seismographs. The seismographs record the time of arrival of the seismic waves, both direct and reflected waves. Knowing the time and place of the explosion or earthquake, the time of travel of the waves through the interior can be calculated and used to measure the velocity of the waves in the interior. A similar technique can be used for offshore oil and gas exploration. In offshore exploration, a ship tows a sound source and underwater hydrophones. Low frequency (*e.g.*, 50 Hz) sound waves are generated by, for example, a pneumatic device that works like a balloon burst. The sounds bounce off rock layers below the sea floor and are picked up by the hydrophones. In this manner, subsurface sedimentary structures that trap oil, such as faults, folds, and domes, are "mapped" by the reflected waves. The data is processed to produce 3D volume data sets that include a reflection or seismic amplitude datavalue at specified (x, y, z) locations within a geographic space.

A 3D volume data set is made up of "voxels" or volume elements having x, y, z coordinates. Each voxel has a numeric data value for some measured or calculated physical property, at a given location. A data value may, for instance, be an eight bit data word which may include 256 possible values. Examples of geological data values include amplitude, phase, frequency, and semblance. Different data values are stored in different 3D volume data sets, wherein each 3D volume data set represents a different data value. In order to analyze certain geological structures referred to as "events", information from different 3D volume data sets must be interpreted and then used to analyze different events.

One conventional method of displaying multiple 3D volume data sets requires that the voxels be rescaled in order that the data values from each 3D volume data set fit within the 256 data value range for color display which causes a reduction in accuracy of each 3D volume data set Another conventional method displays each 3D volume data set, however, controls the visual display of each 3D volume data set by adjusting transparency.

In an article written by Jack Lees, in March 1999, published in *The Leading Edge*, entitled "Constructing Faults from Seed Picks by Voxel Tracking," two 3D volume data sets, each using only 128 data values of a 256-data value range, are combined in a single display. The display resolution was significantly reduced, thereby limiting the ability to accurately interpret certain events.

US Patent No. 4,467,461 (Rice) discloses a method and apparatus for concurrently and interactively displaying a selected plurality of measurable properties of geophysical data to derive imperically the best combined presentation of the selected attribute properties for interpretation. In accordance with the method, the one or more geophysical attribute variables are quantified and then rasterized so that the data is represented as a gridded variable area display wherein colour intensity of the grid units is some function of the instantaneous variable. The resultant data is then loaded into digital refresh memory of an image processing computer whereupon it is interactively mixed for analysis in accordance with operator selected colours and colour intensity waiting.

Consequently, there is a need in the art for a system and method to visualize one or more 3D volume data sets with improved accuracy and resolution. Those skilled in the art have therefore long sought and will greatly appreciate the present invention which addresses these and other problems. For purposes of describing the present invention, the terms "image" and "visualize" may be interchangeably used.

SUMMARY OF THE INVENTION

It is therefore, an object of the present invention to seek to provide an improved system and method for visualizing and interpreting multiple 3D volume data sets in a single combined 3D volume data set.

Accordingly, one aspect of the present invention provides a method of digitally processing images in the form of three-dimensional data arrays to render a combo volume derived therefrom, the method comprising the steps of: selecting a base three-dimensional data array, said base three-dimensional data array comprising voxels having a 3D coordinate and a base dataword, said base dataword being related to a first attribute; selecting a second three-dimensional data array, said second three-dimensional data array comprising voxels having a spatially coincident coordinate with respect to said base three-dimensional data array and a second dataword related to a second attribute; selecting voxels in said second three-dimensional data array based on a first predetected data value range; rendering said combo volume by replacing said base dataword in said base three-dimensional data array with a first preselected data value related to said second attribute when said respective voxel in said second three-dimensional data array is within said first preselected data value range; and displaying at least a portion of said combo volume.

Advantageously, the method further comprises the steps of: positioning a seed pick on an event using said display; and identifying points connected to said seed pick which have the same dataword as said seed pick.

Preferably, the event is a geological structure.

Conveniently, the method further comprises the steps of: selecting a third three-dimensional data array, said third three-dimensional data array comprising voxels having a spatially coincident coordinate with respect to said base three-dimensional data array and a third dataword related to a third attribute; selecting voxels in said third three-dimensional data array based on a second preselected data value range; rendering a revised combo volume by replacing said base dataword in said base three-dimensional data array with a second preselected data value related to said third attribute when said respective voxel in said third three-dimensional data array is within said second preselected data value range; and displaying at least a portion of said revised combo volume.

Advantageously, the first attribute, said second attribute, and said third attribute are each related to seismic data.

Another aspect of the present invention provides a computer program comprising computer program code means operable to perform the steps of any one of the above when said program is run on a computer.

A further aspect of the present invention provides a computer program according to the above, embodied on a computer-readable medium.

## BRIEF DESCRIPTION OF THE DRAWINGS

**FIG. 1**    is a flow diagram illustrating one embodiment for implementing the present invention;
**FIG.2**    is a schematic view illustrating the relationship between a typical seismic trace and a data value or voxel;
**FIG. 3**    is a schematic view illustrating an example of seismic amplitude data values given a range between -128 and 127 (an eight bit data value) with an associated data value histogram;
**FIG. 4**    is a schematic view illustrating the relationship between a peak (a positive phase) event and corresponding data values;
**FIG.5**    is a schematic view illustrating seed picks for auto picking all connected points within a defined data value range;
**FIG. 6**    is a schematic view illustrating a resulting geobody outlined by the auto-pick process; and
**FIG. 7**    illustrates one embodiment of a software program or system architecture for implementing the present invention.

While the present invention will be described in connection with presently preferred embodiments, it will be understood that it is not intended to limit the invention to those embodiments. On the contrary, it is intended to cover all alternatives, modifications, and equivalents included within the invention which is only limited by the wording of the appended claims.

## DETAILED DESCRIPTION OF THE PREFERRED EMBODIMENTS

### OVERVIEW

Combination volumes ("Combo Volumes") are created by combining one or more attributes into a single combined attribute volume or Combo Volume. In one example related to seismic attributes within a 3D volume data set, this is accomplished by replacing certain data values (typically having 256 possible values in a seismic attribute 3D volume data set) with another data value (such as an 8-bit seismic marker data value) that denotes certain values of other spatially coincident seismic attribute data values. Combo Volumes are especially useful for enhancing the performance of voxel-based autotrackers. Examples highlighting the utility of Combo Volumes for use in interpreting seismic data include seismic amplitude/instantaneous phase Combo Volumes for autotracking low amplitude discontinuous events. By events it is meant geobodies, such as geological structures depicted by the seismic data. In another example, seismic amplitude/semblance Combo Volumes may be used for stopping the auto tracker at geologic discontinuities such as faults or other geologic boundaries. In yet another example, seismic amplitude/instantaneous frequency Combo Volumes may be used for highlighting particular geologic features as expressed seismically, such as onlap onto a peak event or onlap onto a trough event. Commercial uses for oil and gas exploration and development may include event mapping, model building, multi-attribute displays, and auto-picking enhancement.

## SYSTEM DESCRIPTION

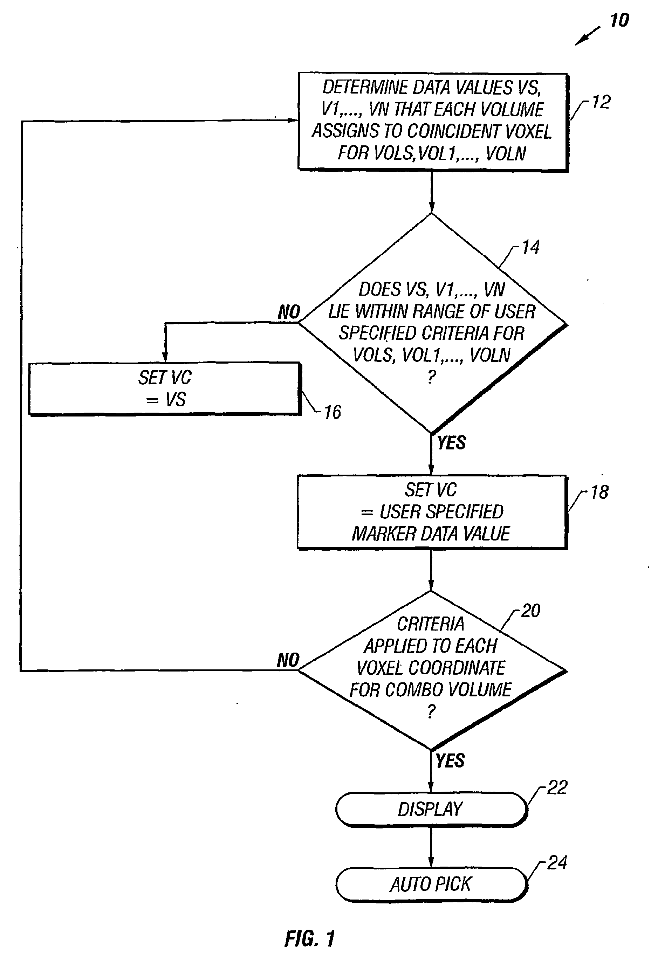

Referring now to **FIG. 1**, a method **10** in accord with the present invention is illustrated for determining the data values associated with voxels for creating an output volume data set. As known by those of skill in the art, a voxel comprises a 3D coordinate location and a data value, such as a 256-value data word, i. e. an 8-bit word. In step **12**, the data values VS, V1, ..., VN for each spatially coincident volume at the same coordinate or point P are determined where VS may be the data value of an original seismic volume at a point P, V1 may be the data value of attribute volume 1 (VOL 1) at point P, and so forth such that VN is the data value of attribute volume N (VOL N) at point P. The data value of the Combo Volume (VC) at point P is then determined as generally illustrated in steps **14, 16** and **18.**

In step **14,** it is determined whether VS, V1, ..., VN lie within user-specified criteria; for instance, whether these data values are within a user-specified range of data values which may be selected for each of VOL S, VOL 1, ..., VOL N. As illustrated in step **16,** if VS, V1, ..., VN do not lie within the criteria, then the data value of VC is set; for instance, to the same data value as VS at point P. Other user-specified data values can be used, or data values taken from any of the 3D volume data sets at the respective point P could be used. As shown in step **18,** if VS, V1, ..., VN lie within the criteria, then the data value of VC is set at a user-specified marker data value that is related to one of the attribute volumes VS, V1, ..., VN. As indicated in step **20,** the criteria are then applied to each point P, *i.e.*, each voxel for the Combo Volume to be produced. Once this reiterative process is complete, a section, slice or other view of the Combo Volume may be displayed as indicated by step **22**. A seed pick may then be chosen from a visually discernable event and the voxels connected thereto having the same data value as the seed pick will be automatically identified as indicated by the "auto-pick" process in step 24. This method quicldy and accurately defines the extent of an event such as a geological structure. The extent of the event could then be displayed for analysis and interpretation.

One embodiment of a Combo Volume used for enhancing the ability to autotrack or auto-pick sub-surface salt boundaries utilizes three 3D volume data sets, each representing a different attribute such as instantaneous frequency, seismic amplitude and instantaneous amplitude. This embodiment of a Combo Volume used to detect and display salt boundaries may be configured using conventional methods to detemine the instantaneous amplitude attribute (IA) of the seismic amplitude data (SA) and the instantaneous frequency of the instantaneous amplitude attribute (IFIA). Accordingly, a new salt detection (SD) Combo Volume may be configured as follows:

$$\text{If } f1 \le \text{IFIA}(x,y,z) \le f2 \text{ AND } a1 \le \text{SA}(x,y,z) \le a2,$$

$$\text{THEN SD}(x,y,z) = v1,$$

$$\text{ELSE SD}(x,y,z) = \text{IA}(x,y,z).$$

The values of f1, f2, a1, a2, and v1 are user selected.

Another embodiment of a Combo Volume consisting of seismic amplitude data and instantaneous phase data can be constructed to enhance the ability to autotrack another seismic event. The instantaneous phase data is derived from the seismic amplitude data using conventional methods. The result is a 3D volume data set having instantaneous phase data values corresponding to each seismic amplitude data value or voxel. At each and every voxel, the instantaneous phase data value is compared to a user-specified data value or criteria. If the instantaneous phase data value satisfies the criteria, then that data value is replaced in the new Combo Volume with a user-specified marker data value. If the instantaneous phase data value does not satisfy the criteria, then that data value in the new Combo Volume is replaced with the corresponding sample data value from the 3D volume data set representing seismic amplitude.

More than two 3D volume data sets can be used, and constraints set for each one, considering spatially coincident data volumes A(x,y,z), B(x,y,z), and C(x,y,z), wherein data volume D(x,y,z) is configured as follows:

$$IF\ a1 \le A(x,y,z) \le a2\ AND/OR\ b1 \le B(x,y,z) \le b2\ AND/or\ c1 \le C(x,y,z) \le c2,$$

$$THEN\ D(x,y,z) = some\ specific\ user\ selected\ data\ value,$$

$$ELSE\ D(x,y,z) = another\ value.$$

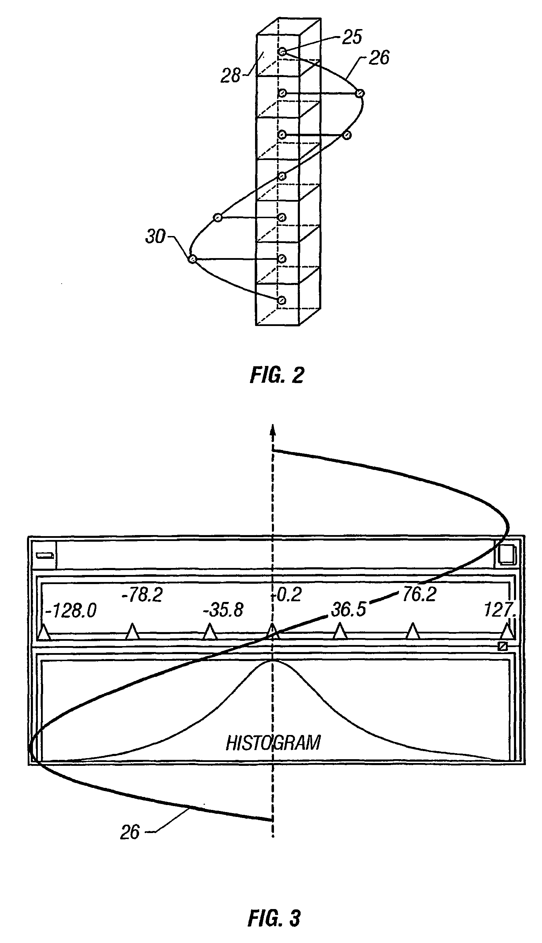

Referring now to **FiG. 2**, the relationship between a typical seismic trace **26** and a plurality of voxels **28** is shown. A sample data value rate **30** is measured at a predetermined interval along seismic trace **26**. The voxels **28** are a 3D representation or box around samples **25** of seismic trace **26**. For seismic data purposes, the voxel may typically have 256 possible data values which may be labeled 0 to 255 or -128 to 127, or a data value range determined by the type of data being used. The measured data values for any 3D volume data set are divided between voxels **28**.

**FIG. 3** illustrates an example of seismic amplitude data values given the range -128 to 127 with an associated data histogram.

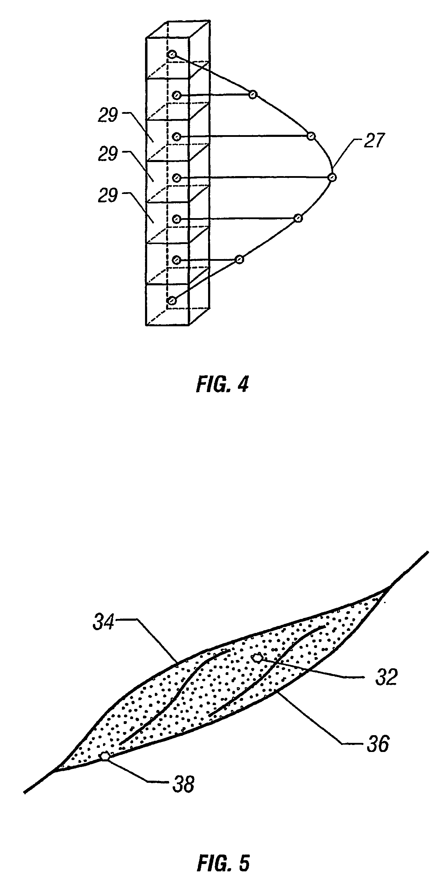

**FIG. 4** illustrates the relationship between a peak (positive phase) event **27** and the associated voxels **29**.

Another embodiment of the present invention involves creation of an enhanced 3D volume data set. The enhanced 3D volume data set is used to enhance the ability of the autotracker to create surfaces, events and/or geobodies. While this method can be applied to any type of 3D volume data set, seismic phase data values are used in reference to the following description. The enhanced 3D volume data set combines certain of the 256 data values in an 8-bit seismic data volume with marker values that are associated with such certain data values.

In order to create an enhanced 3D volume data set representing seismic phase, a range of data values is selected around the maximum peak phase data value. For instance, when using a peak data value scale from 0 to 255, where a peak would be a data value of 127, a potential range might be from about 115 to 139. All voxels in the 3D volume data set would be tested and any voxels having a data value in this range may be redefined with a user-selected data value such as 127. As illustrated in **FIG. 5,** a seed pick **32** pick may then be visually positioned within a selected event. A computer generated process may then identify or auto-pick, and display any point **38** connected to the seed pick **32** within a range defined by an upper boundary **34** and a lower boundary **36** that would either include or exclude that data value as more particularly illustrated in **FIG. 5** which outlines a geobody formed as a result of the seed pick and auto-pick processes applied to an enhanced seismic phase 3D volume data set.

In another embodiment, a Combo Volume is derived from more than one 3D volume data set. It is important to note that the method of the present invention can be applied using any combination of 3D volume data sets, but for explanation purposes a seismic example is provided using a combination of seismic attribute, seismic phase and seismic amplitude data volumes. A base 3D volume data set is selected. The base 3D volume data set will retain its histogram distribution across the amplitude range (-128 to 127) as shown for example in **FIG. 3.** On a scale of 0 to 255, 0 would be a -128 trough and 255 would be a 127 peak. A second 3D volume data set is selected from which to choose key voxels to combine with the base 3D volume data set.

In this embodiment, seismic phase data is used in reference to the following description. A range of data values is selected around the maximum peak seismic phase data value. When using a peak data value scale from 0 to 255, where a peak would be a data value of 127, a potential range might be from about 115 to 139. All voxels within this range would be redefined with a data value of 127 (maximum peak) or 255 on a scale of 0 to 255. The resulting Combo Volume would be displayed and a seed pick would then be positioned on the key event. The auto-picker process would then find all the connected points as described in reference to **FIG. 5.**

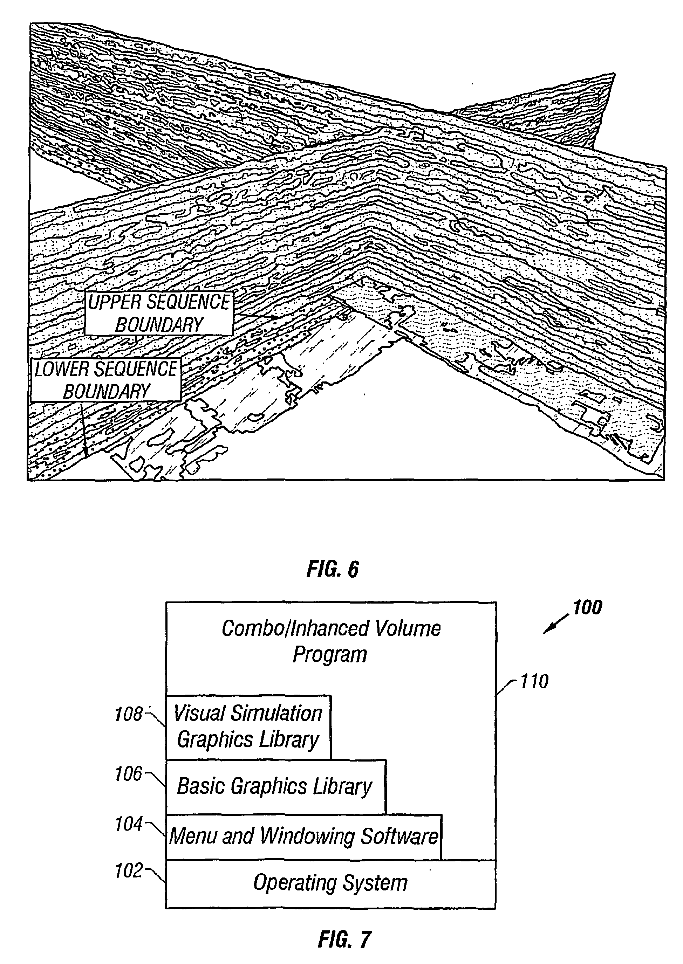

The present invention may be implemented using hardware, software or a combination thereof, and may be implemented in a computer system or other processing system. One embodiment of a software or program structure **100** for implementing the present invention is shown in **FIG. 7**. At the base of program structure **100** is an operating system **102**. Suitable operating systems **102** include, for example, the UNIX® operating system, or Windows NT® from Microsoft Corporation, or other operating systems as would be apparent to one of skill in the relevant art.

Menu and windowing software **104** overlays operating system **102**. Menu and windowing software **104** are used to provide various menus and windows to facilitate interaction with the user, and to obtain user input and instructions. Menu and windowing software **104** can include, for example, Microsoft Windows™, X Window System™ (registered trademark of Massachusetts Institute of Technology), and MOTIF™ (registered trademark of Open Software Foundation Inc.). As would be readily apparent to one of skill in the relevant art, other menu and windowing software could also be used.

A basic graphics library **106** overlays menu and windowing software **104.** Basic graphics library **106** is an application programming interface (API) for 3D computer graphics. The functions performed by basic graphics library **106** include, for example, geometric and raster primitives, RGBA or color index mode, display list or immediate mode, viewing and modeling transformations, lighting and shading, hidden surface removal, alpha blending (translucency), anti-aliasing, texture mapping, atmospheric effects (fog, smoke, haze), feedback and selection, stencil planes, and accumulation buffer.

A particularly preferred basic graphics library **106** is OpenGL®, available from Silicon Graphics, Inc. ("SGI"), Mountain View, California. The OpenGL® API is a multi-platform industry standard that is hardware, window, and operating system independent. OpenGL® is designed to be callable from C, C++, FORTRAN, Ada and Java programming languages. OpenGL® performs each of the functions listed above for basic graphics library **106**. Some commands in OpenGL® specify geometric objects to be drawn, and others control how the objects are handled. All elements of the OpenGL® state, even the contents of the texture memory and the frame buffer, can be obtained by a client application using OpenGL®. OpenGL® and the client application may operate on the same or different machines because OpenGL® is network transparent. OpenGL® is described in more detail in the OpenGL® Programming Guide (ISBN: 0-201-63274-8) and the OpenGL® Reference Manual (ISBN: 0-201-63276-4), the entirety of both of which are incorporated herein by reference.

Visual simulation graphics library **108** overlays basic graphics library **106**. Visual simulation graphics library **108** is an API for creating real-time, multi-processed 3D visual simulation graphics applications. Visual simulation graphics library **108** provides functions that bundle together graphics library state control functions such as lighting, materials, texture, and transparency. These functions track state and the creation of display lists that can be rendered later.

A particularly preferred visual simulation graphics library **108** is IRIS Performer, available from SGI in Mountain View, California. IRIS Performer supports the OpenGL® graphics library discussed above. IRIS Performer includes two main libraries, libpf and libpr, and four associated libraries, libpfdu, libpfdb, libpfui, and libpfutil.

The basis of IRIS Performer is the performance rendering library libpr, a low-level library providing high speed rendering functions based on GeoSets and graphics state control using GeoStates. GeoSets are collections of drawable geometry that group same-type graphics primitives (*e.g.*, triangles or quads) into one data object. The GeoSet contains no geometry itself, only pointers to data arrays and index arrays. Because all the primitives in a GeoSet are of the same type and have the same attributes, rendering of most databases is performed at maximum hardware speed. GeoStates provide graphics state definitions (*e.g.*, texture or material) for GeoSets.

Layered above libpr is libpf, a real-time visual simulation environment providing a high-performance multi-process database rendering system that optimizes use of multiprocessing hardware. The database utility library, libpfdu, provides functions for defining both geometric and appearance attributes of 3D objects, shares state and materials, and generates triangle strips from independent polygonal input. The database library libpfdb uses the facilities of libpfdu, libpf, and libpr to import database files in a number of industry standard database formats. The libpfui is a user interface library that provides building blocks for writing manipulation components for user interfaces (C and C++ programming languages). Finally, the libpfutil is the utility library that provides routines for implementing tasks such as MultiChannel Option support and graphical user interface (GUI) tools.

An application program which uses IRIS Performer and OpenGL® API typically carry out the following steps in preparing for real-time 3D visual simulation:

    1. Initialize IRIS Performer;

    2. Specify number of graphics pipelines, choose the multiprocessing configuration, and specify hardware mode as needed;

    3. Initialize chosen multiprocessing mode;

    4. Initialize frame rate and set frame-extend policy;

    5. Create, configure, and open windows as required; and

    6. Create and configure display channels as required.

Once the application program has created a graphical rendering environment by carrying out steps 1 through 6 above, then the application program typically iterates through a main simulation loop once per frame.

    7. Compute dynamics, update model matrices, etc.;

    8. Delay until the next frame time;

9. Perform latency critical viewpoint updates; and

10. Draw a frame.

A combo/enhanced volume program **110** of the present inventions overlays visual simulation graphics library **108**. Program **110** interacts with, and uses the functions carried out by, each of visual simulation and graphics library **108**, basic graphics library **106,** menu and windowing software **104,** and operating system **102** in a manner known to one of skill in the relevant art.

Program **110** of the present invention is preferably written in an object oriented programming language to allow the creation and use of objects and object functionality. A particularly preferred object oriented programming language is C++.

In one embodiment, program **110** stores the 3D volume data set in a manner well known to one of skill in the relevant art. For example, the format for data volume can consist of two parts, a volume header followed by the body of data that is as long as the size of the data set. The volume header typically contains information, in a prescribed sequence, such as the file path (location) of the data set, size, dimensions in the x, y, and z directions, annotations for the x, y, and z axes, annotations for the datavalue, etc. The body of data is a binary sequence of bytes, one or more bytes per data value, that can be ordered in the following manner. The first byte is the datavalue at volume location $(x, y, z)=(0,0,0)$. The second byte is the datavalue at volume location $(1,0,0)$, the third byte is the datavalue at volume location $(2,0,0)$, etc. When the x dimension is exhausted, then the y dimension is incremented, and finally the z dimension is incremented. The present invention is not limited in any way to a particular data format.

The program **110** facilitates input from a user to identify one or 3D volume data sets to use for imaging and analysis. When a plurality of data volumes is used, the datavalue for each of the plurality of data volumes represents a different physical parameter or attribute for the same geographic space. By way of example, a plurality of data volumes could include a geology volume, a temperature volume, and a water-saturation volume. The voxels in the geology volume can be expressed in the form (x, y, z, seismic amplitude). The voxels in the temperature volume can be expressed in the form (x, y, z, °C). The voxels in the water-saturation volume can be expressed in the form (x, y, z, %saturation). The physical or geographic space defined by the voxels in each of these volumes is the same. However, for any specific spatial location $(x_0, y_0, z_0)$, the seismic amplitude would be contained in the geology volume, the temperature in the temperature volume, and the water-saturation in the water-saturation volume.

## Claims

1. A method of digitally processing images in the form of three-dimensional data arrays to render a combined volume derived therefrom, the method comprising the steps of:

   selecting a base three-dimensional data array, said base three-dimensional data array comprising voxels having a 3D coordinate and a base dataword, said base dataword being related to a first attribute;
   selecting a second three-dimensional data array, said second three-dimensional data array comprising voxels having a spatially coincident coordinate with respect to said base three-dimensional data array and a second dataword related to a second attribute;
   selecting voxels in said second three-dimensional data array based on a first preselected data value range;
   rendering said combined volume by replacing said base dataword in said base three-dimensional data array with a first preselected data value related to said second attribute when said respective voxel in said second three-dimensional data array is within said first preselected data value range; and
   displaying at least a portion of said combined volume.

2. A method according to Claim 1, further comprising the steps of:

   positioning a seed pick on an event using said display; and
   identifying points connected to said seed pick which have the same dataword as said seed pick.

3. A method according to Claim 2, wherein said event is a geological structure.

4. A method according to any preceding claim, further comprising the steps of:

   selecting a third three-dimensional data array, said third three-dimensional data array comprising voxels having a spatially coincident coordinate with respect to said base three-dimensional data array and a third dataword related to a third attribute;

selecting voxels in said third three-dimensional data array based on a second preselected data value range; rendering a revised combined volume by replacing said base dataword in said base three-dimensional data array with a second preselected data value related to said third attribute when said respective voxel in said third three-dimensional data array is within said second preselected data value range; and displaying at least a portion of said revised combined volume.

5. A method according to Claim 4, wherein said first attribute, said second attribute, and said third attribute are each related to seismic data.

6. A computer program comprising computer program code means operable to perform the steps of any one of the preceding claims when said program is run on a computer.

7. A computer program according to Claim 6, embodied on a computer-readable medium.


**Patentansprüche**

1. Verfahren zum digitalen Verarbeiten von Bildern in Form von dreidimensionalen Datenarrays zum Wiedergeben eines daraus abgeleiteten kombinierten Volumens, wobei das Verfahren die folgenden Schritte umfaßt:

Auswählen eines dreidimensionalen Basisdatenarrays, wobei das dreidimensionale Basisdatenarray Voxel mit einer 3D-Koordinate und einem Basisdatenwort umfaßt, wobei das Basisdatenwort zu einem ersten Attribut in Beziehung steht;
Auswählen eines zweiten dreidimensionalen Datenarrays, wobei das zweite dreidimensionale Datenarray Voxel mit einer räumlich zusammenfallenden Koordinate bezüglich des dreidimensionalen Basisdatenarrays und ein zu einem zweiten Attribut in Beziehung stehendes zweites Datenwort umfaßt;
Auswählen von Voxel in dem zweiten dreidimensionalen Datenarray auf der Basis eines ersten im voraus detektierten Datenwertbereichs;
Wiedergeben des kombinierten Volumens durch Ersetzen des Basisdatenworts in dem dreidimensionalen Basisdatenarray mit einem zu dem zweiten Attribut in Beziehung stehenden ersten im voraus ausgewählten Datenwert, wenn das jeweilige Voxel in dem zweiten dreidimensionalen Datenarray innerhalb des ersten im voraus ausgewählten Datenwertbereichs liegt; und
Anzeigen mindestens eines Abschnitts des kombinierten Volumens.

2. Verfahren nach Anspruch 1, weiterhin mit den folgenden Schritten:

Positionieren eines Seed-Picks bei einem Ereignis unter Verwendung des Displays und
Identifizieren von mit dem Seed-Pick verbundenen Punkten, die das gleiche Datenwort wie der Seed-Pick aufweisen.

3. Verfahren nach Anspruch 2, wobei das Ereignis eine geologische Struktur ist.

4. Verfahren nach einem der vorhergehenden Ansprüche, weiterhin mit den folgenden Schritten:

Auswählen eines dritten dreidimensionalen Datenarrays, wobei das dritte dreidimensionale Datenarray Voxel mit einer räumlich zusammenfallenden Koordinate bezüglich des dreidimensionalen Basisdatenarrays und ein zu einem dritten Attribut in Beziehung stehendes drittes Datenwort umfaßt;
Auswählen von Voxel in dem dritten dreidimensionalen Datenarray auf der Basis eines zweiten im voraus detektierten Datenwertbereichs;
Wiedergeben des revidierten kombinierten Volumens durch Ersetzen des Basisdatenworts in dem dreidimensionalen Basisdatenarray mit einem zu dem dritten Attribut in Beziehung stehenden zweiten im voraus ausgewählten Datenwert, wenn das jeweilige Voxel in dem dritten dreidimensionalen Datenarray innerhalb des zweiten im voraus ausgewählten Datenwertbereichs liegt; und
Anzeigen mindestens eines Abschnitts des kombinierten Volumens.

5. Verfahren nach Anspruch 4, wobei das erste Attribut, das zweite Attribut und das dritte Attribut jeweils zu seismischen Daten in Beziehung stehen.

6. Computerprogramm, das Computerprogrammcodemittel umfaßt, die betriebsbereit sind, die Schritte eines beliebigen der vorausgegangenen Ansprüche auszuführen, wenn das Programm auf einem Computer läuft.

7. Computerprogramm nach Anspruch 6, auf einem computerlesbaren Medium verkörpert.

**Revendications**

1. Procédé de traitement numérique d'images sous forme de matrices de données tridimensionnelles afin de rendre un volume combiné dérivé de celles-ci, le procédé comprenant les étapes de :

   sélection d'une matrice de données tridimensionelle de base, ladite matrice de données tridimensionnelle de base comprenant des voxels ayant une coordonnée 3D et un mot de données de base, ledit mot de données de base se rapportant à un premier attribut ;
   sélection d'une deuxième matrice de données tridimensionnelle, ladite deuxième matrice de données tridimensionnelle comprenant des voxels ayant une coordonnée coïncidant spatialement par rapport à ladite matrice de données tridimensionnelle de base et un deuxième mot de données se rapportant à un deuxième attribut ;
   sélection de voxels dans ladite deuxième matrice de données tridimensionnelle en fonction d'une première gamme de valeurs de données prédétectées ;
   rendu dudit volume combiné en remplaçant ledit mot de données de base dans ladite matrice de données tridimensionnelle de base par une première valeur de données présélectionnée se rapportant audit deuxième attribut quand ledit voxel respectif dans ladite deuxième matrice de données tridimensionnelle est compris dans ladite première gamme de valeurs de données présélectionnées ; et
   affichage d'au moins une partie dudit volume combiné.

2. Procédé selon la revendication 1, comprenant en outre les étapes de :

   positionnement d'une désignation de départ sur un événement au moyen dudit affichage ; et
   identification des points connectés à ladite désignation de départ qui ont le même mot de données que ladite désignation de départ.

3. Procédé selon la revendication 2, dans lequel ledit événement est une structure géologique.

4. Procédé selon l'une quelconque des revendications précédentes, comprenant en outre les étapes de :

   sélection d'une troisième matrice de données tridimensionnelle, ladite troisième matrice de données tridimensionnelle comprenant des voxels ayant une coordonnée coïncidant spatialement par rapport à ladite matrice de données tridimensionnelle de base et un troisième mot de données se rapportant à un troisième attribut ;
   sélection de voxels dans ladite troisième matrice de données tridimensionnelle en fonction d'une deuxième gamme de valeurs de données présélectionnées ;
   rendu d'un volume combiné révisé en remplaçant ledit mot de données de base dans ladite matrice de données tridimensionnelle de base par une deuxième valeur de données présélectionnée se rapportant audit troisième attribut quand ledit voxel respectif dans ladite troisième matrice de données tridimensionnelle est compris dans ladite deuxième gamme de valeurs de données présélectionnées ; et
   affichage d'au moins une partie dudit volume combiné révisé.

5. Procédé selon la revendication 4, dans lequel ledit premier attribut, ledit deuxième attribut, et ledit troisième attribut se rapportent chacun à des données sismiques.

6. Programme informatique comprenant un moyen de code de programme informatique exploitable pour exécuter les étapes de l'une quelconque des revendications précédentes quand ledit programme est exécuté sur un ordinateur.

7. Programme informatique selon la revendication 6, mis en oeuvre sur un support lisible par ordinateur.

FIG. 1

**FIG. 2**

-128.0     -78.2     -35.8     0.2     36.5     76.2     127.

HISTOGRAM

**FIG. 3**

**FIG. 4**

**FIG. 5**

**FIG. 6**

**FIG. 7**